(19) Europäisches Patentamt

European Patent Office

Office européen des brevets

(11) **EP 1 254 499 B1**

(12) **EUROPEAN PATENT SPECIFICATION**

| | |
|---|---|
| (45) Date of publication and mention of the grant of the patent: **02.05.2007 Bulletin 2007/18** | (51) Int Cl.: **H02J 7/00** (2006.01) |
| (21) Application number: **00981192.8** | (86) International application number: **PCT/DK2000/000695** |
| (22) Date of filing: **14.12.2000** | (87) International publication number: **WO 2001/045229 (21.06.2001 Gazette 2001/25)** |

(54) **METHOD FOR RAPID CHARGING OF FULLY ENCLOSED BATTERIES**

Energieverteilungsmodul

PROCEDE DE CHARGEMENT RAPIDE DE BATTERIES FERMEES

| | |
|---|---|
| (84) Designated Contracting States: **AT BE CH CY DE DK ES FI FR GB GR IE IT LI LU MC NL PT SE TR** | (72) Inventor: **PAGH, Karsten DK-3600 Frederikssund (DK)** |
| (30) Priority: **14.12.1999 DK 178299** | (74) Representative: **Siiger, Joergen et al Chas. Hude A/S, H.C. Andersens Boulevard 33 1780 Copenhagen V (DK)** |
| (43) Date of publication of application: **06.11.2002 Bulletin 2002/45** | |
| (73) Proprietor: **J.K. MEDICO APS 3660 Stenlose (DK)** | (56) References cited: **EP-A2- 0 385 145    GB-A- 2 312 571 US-A- 4 146 830    US-A- 5 367 244 US-A- 5 508 598** |

**Description**

Technical Field

The invention relates to a method for rapid charging of fully enclosed batteries, by which method a battery in a first charging step is charged with a charging current and a charging voltage adapted to the properties of the battery, whereafter the charging process is concluded with a post-charging process.

Such a charging method is for instance used in situations, in which fully enclosed, eg sealed, maintenance-free lead batteries, VRLA (Valve Regulated Lead Acid batteries), may be subjected to repeated deep discharges and the available recharging time is limited.

Background Art

Charging with a constant current until a maximum voltage specific to the battery is reached, (I-phase), whereafter the charging at this voltage is continued at decreasing current, until the battery is fully charged (U-phase), is known as an IU characteristic.

Charging with continuously decreasing current towards a battery-specific maximum voltage, until the battery is fully charged, is known as a W characteristic.

It is also known to switch to trickle charging when the charging is completed.

Both undercharging and overcharging reduce the lifetime of a fully enclosed battery. Depending on the design and discharge degree of the battery, a charge factor of 1.05 to 1.15 is needed for a VRLA battery to be fully charged. The battery is thus to be recharged with 105% to 115% of the capacity discharged prior to the charging process. The highest charge factor is required at the highest degree of discharge.

A charger having an IU characteristic of the same initial current as a charger having a W characteristic is able to charge to a charge factor of 1.00 within 55-60% of the time needed by a W characteristic charger. Consequently chargers with an IU characteristic are preferred when the fastest possible charging at an available maximum charging current is needed.

If a VRLA-battery is repeatedly subjected to undercharging, the capacity of the battery gradually decreases and the internal resistance increases due to the formation of a crystalline layer of lead sulphate covering the plates of the battery (sulphation). As a result the lifetime of the battery is reduced.

If a VRLA battery is subjected to an uncontrolled overcharging, the battery degasses unnecessarily due to decomposition of water from the electrolyte of the battery (diluted sulphuric acid). Due to the degassing via pressure relief valves of the battery cells continuous overcharging will cause the battery capacity to decrease and as a result the lifetime of the battery will be reduced. At the same time the corrosion of the battery plates will be increased due an increased acid concentration which also causes a reduction of the lifetime of the battery. When degassing occurs, the part of the charging current, which is converted into stored energy in the battery, is reduced, partly as some of the energy is used for decomposing the water of the electrolyte and partly as the internal resistance is increased due to air bubbles at the plates of the battery. The gassing thus results in a reduced part of the supplied energy being stored and thus to an unwanted rise in temperature having an adverse effect on the lifetime of the battery.

When using a charger with IU characteristic a major fraction of the capacity has to be charged with decreasing current the deeper the battery has been discharged. As the charging current in the U-phase is substantially exponentially decreasing towards 0, the charging time needed for obtaining the necessary charge factor increases dramatically with the degree of discharge.

Chargers with an IU characteristic and a great charging current in relation to the capacity of the battery are often recommended, trying to make time available in which the charge factor can be increased from 1.00 to between 1.05 and 1.15 at low current (near 0).

The diminishing ability of the battery to store the supplied energy at an increasing charging current and the ohmic losses increasing with the charging current squared results in an unintended rise in the battery temperature at large charging currents, said rise having an adverse effect on the lifetime of the battery.

As a criterion for the completion of the charging process a timer indicating a total charge time is often used. Furthermore a timer control of one or more of the steps in the charging process is commonly used. A timer control of the charging process requires a precise adjustment of the charging current to the capacity of the battery and results in an overcharging even at low discharging degrees, if full charging is to be obtained at large discharging degrees. Charging times of 12 to 16 hours for an 80%-100% discharged battery when charging with IU characteristic and a charging current of 0.2-0.4 A/Ah in the I-phase are common.

VRLA batteries are designed to be able to recombine the oxygen and hydrogen formed during the decomposition of water up to a gassing level characteristic of the individual battery type so as to reduce degassing via the valves of the battery. A battery comprising several cells is presumed to have a uniform distribution of the total battery voltage over all cells both at discharging and at charging. However due to production variations between cells, some cells are charged to a higher voltage than other cells, in practice some cells are overcharged while others are undercharged.

In order to prevent a self-amplifying effect of this phenomenon causing a reduction of the lifetime of the battery, some battery manufacturers stipulate that an equalizing charge has to be made at suitable intervals by letting the fully charged battery remain for a long time at the maximum charging voltage, if the battery is continuously subjected to deep discharges. Charging methods are known which retains the charging voltage on the gassing limit for a long time after completed recharging. The time necessary for the equalizing charge cannot, however, be expected to be available in cases, where the available recharging time is limited.

In case of VRLA batteries, gassing rates above the level, at which recombination may take place, reduce the lifetime of the battery. As the ability of the battery to store the supplied energy decreases with the charging degree, a continuously increasing part of the supplied energy is used for gassing in a single-step post-charging process at one predetermined current limit in the entire post-charging period.

EP 0.339.446 discloses a charging method, preferably for gel batteries, based on an IU charging characteristic and comprising a post-charging step, in which charging takes place to an increased and a limited charging voltage at a low charging current. The term "the desired voltage has been reached" is stated as a criterion for completion of the charging process. It is further stated that the duration of the post-charging process may be controlled by the time elapsed prior to the start of the post-charging process. Since the current at low levels is asymptotically approaching 0, and since the current process in the U phase in addition to the degree of discharge is dependent on the battery type, the temperature and the ageing phenomena in the battery, this method for controlling the post-charging process suffers from a high degree of uncertainty.

US patent No 4,952,861 also discloses a charging method based on an IU charging characteristic and comprising one post-charging step, in which charging takes place to an increased and a limited charging voltage at a low charging current. According to this patent, control of the U phase is time-based such that an upper limit has been set for the total duration of the I- and U phases. The post-charging process is of limited duration and no method for controlling the post-charging time is indicated. The duration of the IU process for a charger based on this charging method has to be adapted specifically to a specific battery capacity and battery type. In order to ensure a sufficiently high charge factor prior to the start of the post-charging process, a high safety margin has to be added to the set time limit. The shortest possible duration of the IU process is thus not obtained. If the post-charging time is fixed, depending on the predetermined time and the degree of discharge of the battery - either over- or undercharging will occur. No adaptation of the charging process to the degree of discharge of the battery exists - neither in respect to the IU process nor the post-charging process.

US patent 5,508,598 discloses a method for charging of NiCd batteries, by which method the main charging is carried out with constant current pulses (I phase), the value of which being reduced step-wise when the degree of charge of the battery is increased, the degree of charge being determined by measuring the battery voltage while discharging during the current pauses. After the last constant current phase, change is made to a constant voltage (U-phase), as the voltage pendlers within a small area (hysteresis) whereby the average value of the current is pulse width-modulated and as a result decreases asymptotically towards 0 at the same time as the charge factor is increased slowly towards full charge. However, the total charging time will be relatively long due to a prolonged phase 3. This method does not include a post-charging process.

Description of the Invention

The object of the invention is to provide an adaptive post-charging process which provides a complete recharging of fully enclosed batteries in a relatively short period of time independently of the degree of discharge without causing lifetime-reducing overcharging. The post-charging process is designed such that a temperature rise in the battery, as well as degassing from the battery, is minimized. An equalizing charging is carried out for each recharging during the process and a reduction of the lifetime of the battery due to differently charged cells is thus prevented, lifetime-reducing sulphation in VRLA batteries further being prevented.

According to the invention the post-charging process comprises at least two steps (step 3 and step 4), the third step having a duration $t_3$, in which a current limited to $I_2$ is charging towards a voltage $U_2$ exceeding $U_1$, said third step being followed by a fourth step (step 4) having duration $t_4$, in which a current limited to $I_3$ lower than $I_2$ is charging towards a voltage $U_3$ exceeding $U_1$, the post-charging process being controlled so that the total charge charged during the periods $t_3$ and $t_4$ increases versus the charge charged prior to the start of the period $t_3$. $U_2$ and $U_3$ are not limited to predetermined values.

The post-charging process is based on a controlled and stepwise overcharging process, a maximum current being determined for each step, said maximum being reduced with every step. The post-charging process may comprise two or more steps. The process is adaptive in the sense that the total charge charged during the post-charging steps is controlled such that the charge increases versus the charge charged prior to the start of the post-charging process, said controlling charge being measured directly or indirectly. As an indirect measurement the time $t_{arb}$ from the start of the charging process until the current has decreased to a chosen threshold value $I_{arb}$ may be used. In order to prevent the measured time $t_{arb}$ from being influenced by temperature, ageing phenomena and production variations, $I_{arb}$ is set to a value considerably above 0, at which current the change in the current per time unit is high.

Depending on the battery type and any specific application requirements regarding the duration of the post-charging process, for each post-charging step the charger may control the charged charge either by controlling the duration and keeping the current constant or by controlling the current and keeping the duration constant or by controlling the duration as well as the current.

Depending on the battery type, it is possible either to control the absolute charged charge for each post-charging step by not limiting the voltage of the battery, whereby the charging takes place with a constant current, or to control the maximum charged charge by limiting the voltage of the battery, thus reducing the current, when the voltage limit is reached.

A voltage limit may be adapted to the specific battery type or to a given battery type for each charging step.

The controlled, stepwise overcharging process may be initiated in a U-phase taking place prior to the post-charging process by gradually increasing the voltage as the current decreases, the current being limited such that it cannot rise when the voltage increases.

Regardless of the degree of discharge of the battery, the adaptively controlled post-charging process thus ensures that the necessary charge factor is obtained in a short period of time without any lifetime-reducing overcharging. Lifetime-reducing sulphation of VRLA batteries is prevented. As a result, an economical battery efficiency is obtained independently of the application of the battery.

At a given available recharging time, the need for a high charging current in the initial phase of the charging process is reduced. As a result a cost-saving effect on the power electronics of the charger is obtained.

Both prior to and during the post-charging process the low charging current furthermore minimises the heating of the battery during the charging process. The minimum degassing and the minimum rise in temperature moreover reduce the lifetime-reducing corrosion.

In respect of VRLA batteries the post-charging process, in which the charging current is gradually reduced, has the effect that at all times the battery is able to store most of the supplied energy and that most of occurring gassing is recombined, whereby degassing from the battery is reduced to a level without any significant effect on the lifetime of the battery.

The post-charging process carries out an equalizing charging for each cycle, whereby a reduction in the lifetime of the battery due to differently charged cells is prevented.

The post-charging process may be used independently of the charging method in the preceding part of the charging process. The shortest possible charging time is, however, obtained by combining an IU characteristic with the said post-charging process.

The post-charging process is short and ensures a complete charging in a relatively short period of time. At a given available charging time, the need for a high charging current in the initial phase of the charging process is reduced. As a result the heating and corrosive decomposition of the battery are reduced. The adaptive control of the post-charging process ensures that the battery is not subjected to overcharging at low discharge degrees.

Using the present invention with an IU charger for VRLA batteries, which in the I phase has a charging current of $0.25 \cdot C$ (0.25A/Ah), reduces the recharging time to six hours for a 100% discharged battery. Due to the adaptive nature of the charging method a charging time which is approximately proportional to the battery capacity is obtained when charging larger batteries using the same charger. With a charging current in the I-phase of for instance $0.1 \cdot C$ (0.1A/Ah), a charging time of less than 16 hours is obtained. The post-charging process is also applicable for larger charging currents.

The invention has been tested on GEL-batteries as well as on AGM batteries of the VRLA type, the batteries continuously being subjected to discharging degrees of 90-100%.

The capacity evolvement in the batteries and their total lifetime have been found to correspond to the specifications stated by the battery manufacturers.

Brief Description of the Drawings

The invention is explained in greater detail below with reference to the accompanying drawings, in which

Fig. 1 illustrates an example of an IU characteristic comprising a two-step post-charging process according to the present invention,

Fig. 2 illustrates an example of an IU characteristic comprising a post-charging process according to the present invention, the controlled overcharging being initiated during the end of the U-phase (step 2) by gradually increasing the charging voltage as the current gradually decreases, while the current is controlled such that it cannot rise when the charging voltage increases, and

Fig. 3 illustrates an example of an IU characteristic according to the present invention comprising a post-charging process formed of a plurality of minor steps.

Best Mode for Carrying Out the Invention

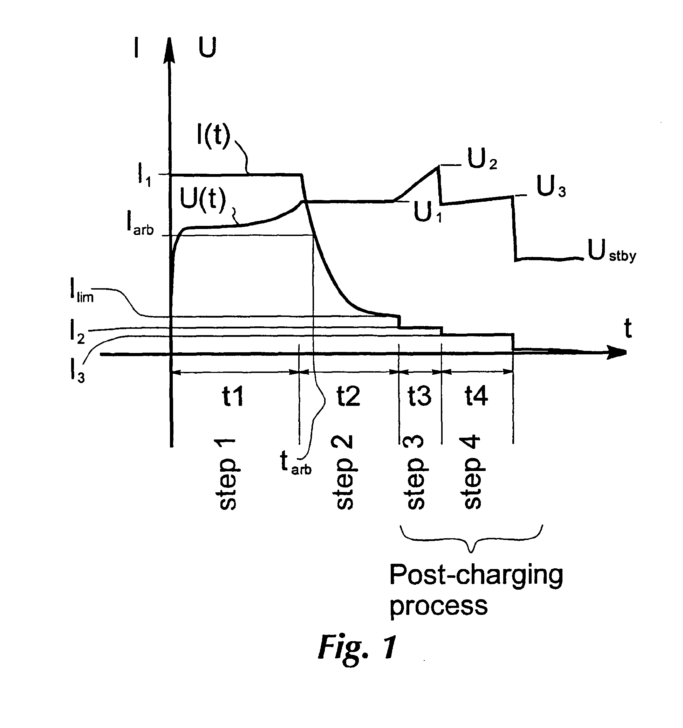

The charging process shown in Fig. 1 of the method according to the invention is divided into four steps (in the following denoted as step 1, step 2, step 3 and step 4). In step 1 of the charging process the battery is charged with a constant current $I_1$ equal to the initial current $I_{start}$.

Step 1 of the charging process of the duration t1 is completed when the battery voltage has risen to $U_1$. In step 2 the voltage is kept constant and equal to $U_1$ (dU/dt = 0), while the current decreases exponentially. Step 2 of the duration t2 is completed when the charging current I has decreased to the characteristic current $I_{lim}$ of the battery in question, the magnitude of said current being determined based on experience.

In the first post-charging step, step 3, the charging current I is kept constant at a value $I_2$ while the battery voltage U in the period t3 increases towards a voltage $U_2$ exceeding $U_1$. In the second post-charging step, step 4, the charging current I is kept constant at a value $I_3$ being lower than $I_2$, while the battery voltage U in the period t4 increases towards a voltage $U_3$ exceeding $U_1$.

The current values $I_2$ and $I_3$ and the periods t3 and t4 are optimized in consideration of the recombination ability of the battery such that the optimum amount of energy is stored in the battery during steps 3 and 4 without any life-reducing degassing from the battery occurring and such that the total duration of the post-charging process is minimised. The duration of the period t4 is usually longer than that of the period t3.

The battery is fully charged upon completion of step 4. Subsequent to step 4, the voltage may be lowered to a trickle voltage, $U_{stby}$, specific to the battery in question, whereby the current I decreases to a negligible value.

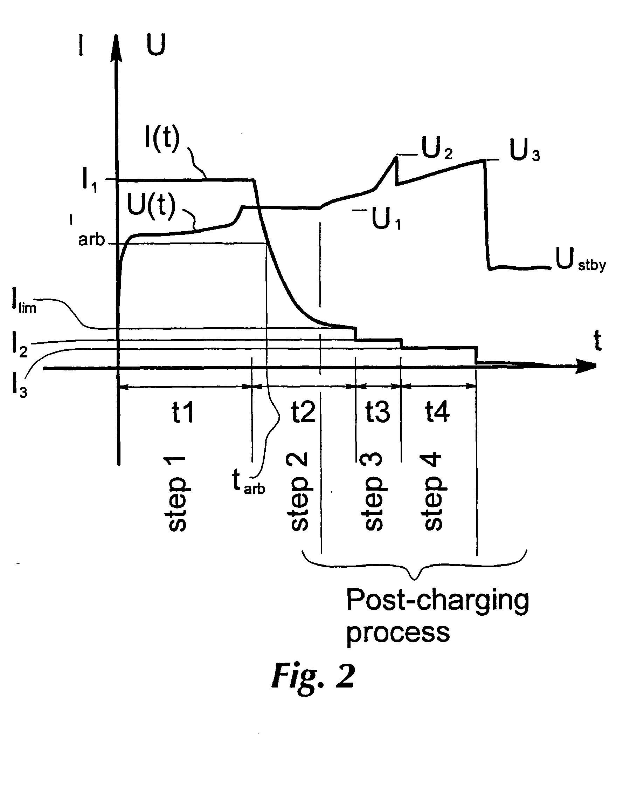

The process shown in Fig. 2 of a recharging by means of the method according to the invention is similar to the method shown in Fig. 1 except that the charging voltage during the end of step 2 is gradually increased from $U_1$ to a voltage being lower than $U_2$, the current being limited such that it is prevented from rising as the charging voltage increases.

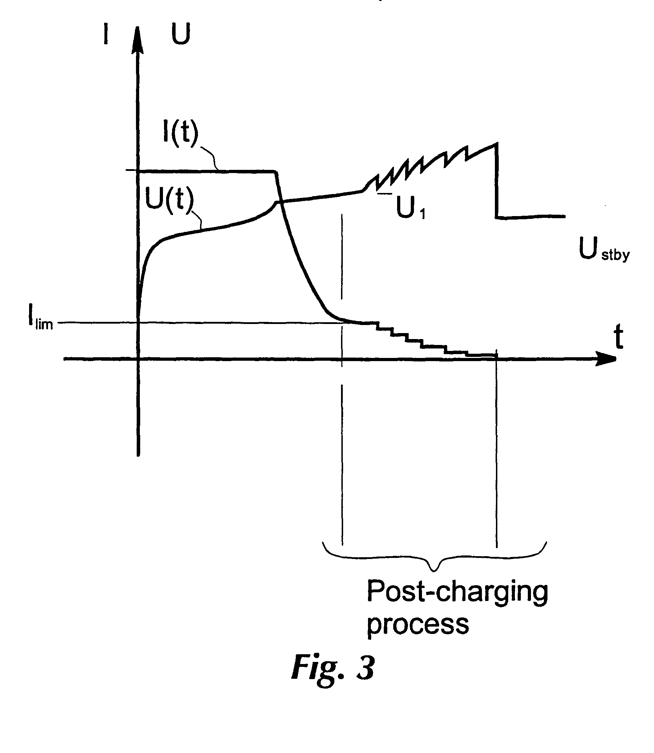

Fig. 3 illustrates are charging process by means of the method according to the invention, in which step 1 and step 2 have the same IU characteristic as in Fig. 1. However the post-charging process comprises a plurality of minor steps, in which the charging current I decreases for each step. The voltage, to wards which the current is charging, is chosen so as to optimise the charging process and may be increasing. The object of this embodiment of the invention is also to minimise the charging time by controlling the overcharging such that the optimum part of the energy supplied to the battery is stored. If the number of post-charging steps is high, while the change in the charging current and the change in the charging voltage for each step both are small, the control may be considered continuous.

In a specific embodiment following the process shown in Fig. 1 the current and voltage magnitudes used may be determined based on the knowledge of and measurements on the battery in question.

In an actual example with IU characteristic the current during step 1 being constant and equal to $I_1$ $I_{arb}$ has been set to $0.66 \cdot I_1$ or about 2/3 of the initial charging current . The time $t_{arb}$ from the start of the charging process until the charging current has decreased to $I_{arb}$ is used as an indirect parameter of the charge charged prior to the post charging process. The ratio of current I1 to battery capacity $C_{batt}$ typically ranges from 0.1 to 1, and the ratio of $I_{lim}$ to $C_{batt}$ typically ranges from 0.005 to 0.1. The same also applies to the ratio of I2 to $C_{batt}$. In a similar example, where the charging in step 1 takes place with a current decreasing with time (W characteristic), the $I_{arb}$ is set to $0.33 \cdot I_1$ and the ratio of $I_1$ to $C_{batt}$ typically ranges from 0.2 to 2. The ratio $I_1$ to $C_{batt}$ and the ratio of $I_{lim}$ to $C_{batt}$ contribute to determining the duration of steps 1 and 2 of the charging process, as shown in Fig. 1.

The voltage U1 is maintained at between 2.30 and 2.50 V per cell, while the voltages $U_2$ and $U_3$ each is at about 2.50 V per cell or more. This applies at a temperature of 25°C. By additionally optimizing the charging process, $I_3$ is set to a value of between $0.25 \cdot I_2$ and $0.75 \cdot I_2$. The duration of steps 3 and 4 has been set such that the sum of t3 and t4 is between $0.1 \cdot t_{arb}$ and $t_{arb}$, and t4 is between t3 and $6 \cdot t3$. The above parameters may thus be adjusted independently of each other, the type and the technical data of the battery to be charged according to the method being taken into account.

In Fig. 1, the current $I_{lim}$ at which the post-charging process is initiated exceeds the maximum current $I_2$ in the first post-charging step (step 3). When optimizing the charging process the current $I_{lim}$ may be selected to be higher than, lower than or equal to $I_2$.

In the drawing the voltages $U_2$ and $U_3$, to wards which charging takes place in the post-charging steps (step 3 and step 4), are shown to be at the same level. As part of an optimization of the charging process $U_2$ and $U_3$ may be selected to differ from one another.

The limitation of the voltage to $U_2$ may be omitted for charging with the current $I_2$ during the entire step 3.

The limitation of the voltage to $U_3$ may be omitted for charging with the current $I_3$ during the entire step 4.

Depending on the application, subsequent to the last post-charging step it is possible either to switch to a temperature-dependent trickle voltage, $U_{stby}$, or to terminate the charging process.

**Claims**

1.  A method for rapid charging of fully enclosed batteries, by which method a battery in a first charging step (step 1) is charged with a charging current $I_1$ towards a charging voltage $U_1$ adapted to the properties of the battery, whereafter the charging process is concluded with a post-charging process, **characterised in that** the post-charging process comprises at least two steps (step 3 and step 4), the third step (step 3) having a duration $t_3$, in which a current limited to $I_2$ is charging towards a voltage $U_2$ exceeding $U_1$, said third step being followed by a fourth step (step 4) having a duration $t_4$, in which a current limited to $I_3$ lower than $I_2$ is charging towards a voltage $U_3$ exceeding $U_1$, the post-charging being controlled so that the total charge charged during the periods $t_3$ and $t_4$ increases versus the charge charged prior to the start of the period $t_3$.

2.  A method according to claim 1, **characterised by** the charging voltage $U_1$ being a temperature-dependent voltage, the charging in the second step (step 2) with the voltage $U_1$ taking place during a decreasing current until a predetermined lower limit of the current specific to the battery has been reached.

3.  A method according to claim 1 or 2, **characterised in that** during the second step (step 2) the charging voltage is gradually increased from $U_1$ to a voltage lower than or equal to $U_2$, the current being continuously limited so as to be prevented from being increased as the voltage increases.

4.  A method according to one or several of the preceding claims, **characterised in that** the time $t_{arb}$ from the start of the charging process until the current in the second step has decreased to an arbitrary value $I_{arb}$ is used as a parameter of the charge charged prior to the start of the period $t_3$.

5.  A method according to one or more of the preceding claims, **characterised in that** the charge charged during the post-charging process is controlled by controlling at least one of the periods $t_3$ and $t_4$, the current limits thereof being predetermined.

6.  A method according to one or more of the preceding claims, **characterised in that** the charge charged during the post-charging process is controlled by controlling at least one of the current limits ($I_2$ and $I_3$), the duration of the periods $t_3$ and $t_4$ thereof being predetermined.

7.  A method according to one or more of the preceding claims, **characterised in that** the charge charged during the post-charging process is controlled by controlling the duration of at least one of the periods $t_3$ and $t_4$ and at least one of the current limits ($I_2$ and $I_3$).

8.  A method according to one or several of the preceding claims, **characterised in that** the fourth step is followed by one or several further steps of substantially the same character, as the third and the fourth step, the current limit of each step being reduced in relation to the current limit of the preceding step.

9.  A method according to claim 8, **characterised in that** the post-charging process comprises a plurality of minor steps, the voltage being increased each time the current is reduced.

10. A method according to one or several of the preceding claims, **characterised in that** subsequent to the last step in the post-charging process a change to a temperature-dependent trickle voltage is made, said trickle voltage being specific to the battery.

11. A method according to one or several of the claims 2-10, wherein the parameters are adapted for charging sealed lead acid batteries (VRLA), **characteri s e d in that** a substantially constant current $I_1$ is used for charging during the first step (step 1), such that the first step jointly with the second step form an IU characteristic, $C_{batt}$ being the capacity of the battery in Ah and

$$I_{arb} = 0.66 \cdot I_1 \qquad (|dI/dt| >> 0)$$

$$0.1 \text{ A/Ah} \leq I_1/Cbatt \leq 1 \text{ A/Ah}$$

$$2.30\text{V per cell} \leq U_1 \leq 2.50\text{V per cell}$$

$$2.50\text{V per cell} \leq U_2$$

$$2.50\text{V per cell} \leq U_3$$

$$0.005 \text{ A/Ah} \leq I_{lim}/C_{batt} \leq 0.1 \text{ A/Ah}$$

$$0.005 \text{ A/Ah} \leq I_2/C_{batt} \leq 0.1 \text{ A/Ah}$$

$$0.25 \cdot I_2 \leq I_3 \leq 0.75 \cdot I_2$$

$$0.1 \leq t_{arb} \ (t_3 + t_4) \leq t_{arb}$$

$$t_3 \leq t_4 \leq 6 \ t_3.$$

12. A method according to one or several of the claims 2-10, wherein the parameters are adapted for charging sealed lead acid batteries (VRLA), **characterised in that** a decreasing current is used for charging in the first step, the initial value of the current is $I_1$ and such that the first step jointly with the second step form a W characteristic,

$$I_{arb} = 0.33 \cdot I_1 \qquad (|dI/dt| >> 0)$$

$$0.2 \text{ A/Ah} \leq I_1/C_{batt} \leq 2 \text{ A/Ah}$$

$$2.30\text{V per cell} \leq U_1 \leq 2.50\text{V per cell}$$

$$2.50\text{V per cell} \leq U_2$$

$$2.50\text{V per cell} \leq U_3$$

$$0.005 \text{ A/Ah} \leq I_{lim}/C_{batt} \leq 0.1 \text{ A/Ah}$$

7

$$0.005 \text{ A/Ah} \leq I_2/C_{batt} \leq 0.1 \text{ A/Ah}$$

$$0.25 \, I_2 \leq I_3 \leq 0.75 \cdot I_2$$

$$0.1 \, t_{arb} \leq (t_3 + t_4) \leq t_{arb}$$

$$t_3 \leq t_4 \leq 6 \, t_3.$$

**Patentansprüche**

1.  Verfahren zum Schnelladen vollständig gekapselter Batterien, bei dem eine Batterie in einem ersten Ladeschritt (Schritt 1) mit einem Ladestrom $I_1$ in Richtung auf eine Ladespannung $U_1$ zu geladen wird, ausgelegt auf die Eigenschaften der Batterie, wonach der Ladeprozeß mit einem Nachladeprozeß abgeschlossen wird, **dadurch gekennzeichnet, daß** der Nachladeprozeß mindestens zwei Schritte (Schritt 3 und Schritt 4) umfaßt, wobei der dritte Schritt (Schritt 3) eine Dauer $t_3$ aufweist, wobei ein Strom, der auf $I_2$ begrenzt ist, in Richtung auf eine Spannung $U_2$ zu lädt, die $U_1$ überschreitet, wobei dem dritten Schritt ein vierter Schritt (Schritt 4) folgt, der eine Dauer $t_4$ aufweist, wobei ein Strom, der auf $I_3$ begrenzt und niedriger als $I_2$ ist, in Richtung auf eine Spannung $U_3$ zu lädt, die $U_1$ überschreitet, wobei das Nachladen so gesteuert ist, daß die Gesamtladung, die während der Zeiträume $t_3$ und $t_4$ geladen wird, gegenüber der Ladung zunimmt, die vor dem Beginn des Zeitraumes $t_3$ geladen ist.

2.  Verfahren nach Anspruch 1, **gekennzeichnet durch** die Ladespannung $U_1$, die eine temperaturabhängige Spannung ist, wobei das Laden im zweiten Schritt (Schritt 2) mit der Spannung $U_1$ während eines abnehmenden Stromes stattfindet, bis ein vorgegebener unterer Grenzwert des Stromes erreicht worden ist, der für die Batterie spezifisch ist.

3.  Verfahren nach Anspruch 1 oder 2, **dadurch gekennzeichnet, daß** während des zweiten Schrittes (Schritt 2) die Ladespannung sukzessiv von $U_1$ auf eine Spannung erhöht wird, die niedriger als oder gleich $U_2$ ist, wobei der Strom ständig so begrenzt ist, daß er daran gehindert wird erhöht zu werden, wenn die Spannung steigt.

4.  Verfahren nach einem oder mehreren der vorhergehenden Ansprüche, **dadurch gekennzeichnet, daß** die Zeit $t_{bel}$ ab dem Beginn des Ladeprozesses, bis der Strom im zweiten Schritt auf einen willkürlichen Wert $I_{bel}$ abgenommen hat, als ein Parameter der Ladung verwendet wird, die vor dem Beginn des Zeitraumes $t_3$ geladen ist.

5.  Verfahren nach einem oder mehreren der vorhergehenden Ansprüche, **dadurch gekennzeichnet, daß** die Ladung, die während des Nachladeprozesses geladen wird, durch Steuern mindestens eines der Zeiträume $t_3$ und $t_4$ gesteuert ist, wobei die Stromgrenzwerte derselben vorgegeben sind.

6.  Verfahren nach einem oder mehreren der vorhergehenden Ansprüche, **dadurch gekennzeichnet, daß** die Ladung, die während des Nachladeprozesses geladen wird, durch Steuern mindestens eines der Stromgrenzwerte ($I_2$ und $I_3$) gesteuert ist, wobei die Dauer der Zeiträume t3 und t4 derselben vorgegeben sind.

7.  Verfahren nach einem oder mehreren der vorhergehenden Ansprüche, **dadurch gekennzeichnet, daß** die Ladung, die während des Nachladeprozesses geladen wird, durch Steuern der Dauer mindestens eines der Zeiträume $t_3$ und $t_4$ und mindestens eines der Stromgrenzwerte ($I_2$ und $I_3$) gesteuert ist.

8.  Verfahren nach einem oder mehreren der vorhergehenden Ansprüche, **dadurch gekennzeichnet, daß** dem vierten Schritt ein oder mehrere weitere Schritte des im wesentlichen selben Charakters wie der dritte und der vierte Schritt folgen, wobei der Stromgrenzwert jedes Schrittes in Bezug auf den Stromgrenzwert des vorhergehenden Schrittes reduziert ist.

9. Verfahren nach Anspruch 8, **dadurch gekennzeichnet, daß** der Nachladeprozeß mehrere kleinere Schritte umfaßt, wobei die Spannung jedesmal erhöht wird, wenn der Strom reduziert wird.

10. Verfahren nach einem oder mehreren der vorhergehenden Ansprüche, **dadurch gekennzeichnet, daß** auf den letzten Schritt im Nachladeprozeß folgend ein Wechsel auf eine temperaturabhängige Erhaltungsspannung vorgenommen wird, wobei die Erhaltungsspannung fiir die Batterie spezifisch ist.

11. Verfahren nach einem oder mehreren der vorhergehenden Ansprüche 2 bis 10, wobei die Parameter auf das Laden versiegelter Blei-Säure-Batterien (VRLA) ausgelegt sind, **dadurch gekennzeichnet, daß** ein im wesentlichen konstanter Strom $I_1$ zum Laden während der ersten Schrittes (Schritt 1) derart verwendet wird, daß der erste Schritt gemeinsam mit dem zweiten Schritt eine IU-Charakteristik bildet, wobei $C_{Batt}$ die Kapazität der Batterie in Ah ist und

$$I_{bel} = 0,66 \cdot I_1 \ (|dI/dt|) \gg 0)$$

$$0,1 \ A/Ah \leq I_1/C_{Batt} \leq 1 \ A/Ah$$

$$2,30 \ V \ pro \ Zelle \leq U_1 \leq 2,50 \ V \ pro \ Zelle$$

$$2,50 \ V \ pro \ Zelle \leq U_2$$

$$2,50V \ pro \ Zelle \leq U_3$$

$$0,005 \ A/Ah \leq I_{Gr}/C_{Batt} \leq 0,1 \ A/Ah$$

$$0,005 \ A/Ah \leq I_2/C_{Batt} \leq 0,1 \ A/Ah$$

$$0,25 \cdot I_2 \leq I_3 \leq 0,75 \cdot I_2$$

$$0,1 \leq t_{bel} \ (t_3 + t_4) \leq t_{bel}$$

$$t3 \leq t4 \leq 6t_3.$$

12. Verfahren nach einem oder mehreren der vorhergehenden Ansprüche 2 - 10, wobei die Parameter auf das Laden versiegelter Blei-Säure-Batterien (VRLA) ausgelegt sind, **dadurch gekennzeichnet, daß** ein abnehmender Strom zum Laden im ersten Schritt verwendet wird, der Anfangswert des Stromes $I_1$ und derart ist, daß der erste Schritt gemeinsam mit dem zweiten Schritt eine W-Charakteristik bildet,

$$I_{bel} = 0,33 \cdot I_1 \ (|dI/dt|) \gg 0)$$

$$0{,}2 \text{ A/Ah} \leq I_1/C_{Batt} \leq 2 \text{ A/Ah}$$

$$2{,}30 \text{ V pro Zelle} \leq U_1 \leq 2{,}50 \text{ V pro Zelle}$$

$$2{,}50 \text{ V pro Zelle} \leq U_2$$

$$2{,}50 \text{V pro Zelle} \leq U_3$$

$$0{,}005 \text{ A/Ah} \leq I_{Gr}/C_{Batt} \leq 0{,}1 \text{ A/Ah}$$

$$0{,}005 \text{ A/Ah} \leq I_2/C_{Batt} \leq 0{,}1 \text{ A/Ah}$$

$$0{,}25 \cdot I_2 \leq I_3 \leq 0{,}75 \cdot I_2$$

$$0{,}1 \leq t_{bel} (t_3 + t_4) \leq t_{bel}$$

$$t3 \leq t4 \leq 6t_3.$$

**Revendications**

1. Un procédé de chargement rapide de batteries complètement fermées, procédé par lequel une batterie dans une première étape de chargement (étape 1), est chargée avec un courant de chargement $I_1$ vers une tension de chargement $U_1$ adaptée aux propriétés de la batteries, à la suite de quoi le processus de chargement est achevé avec un processus de post-chargement, **caractérisé en ce que** le processus de post-chargement comprend au moins deux étapes (étape 3 et étape 4), la troisième étape (étape 3) ayant une durée $t_3$, dans laquelle un courant, limité à $I_2$, est en chargement vers une tension $U_2$ supérieure à $U_1$, ladite troisième étape étant suivie par une quatrième étape (étape 4) d'une durée $t_4$, dans laquelle un courant, limité à $I_3$ inférieur à $U_2$ est en chargement vers une tension $U_3$ supérieure à $U_1$, le post-chargement étant commandé de manière que la charge totale ayant été chargée durant les périodes $t_3$ et $t_4$ augmente vers la charge ayant été chargée avant le démarrage de la période $t_3$.

2. Un procédé selon la revendication 1, **caractérisé par le fait que** la tension de chargement $U_1$ est une tension dépendante de la température, le chargement effectué à la deuxième étape (étape 2) avec la tension $U_1$ se produisant durant une phase de courant allant en diminuant, jusqu'à ce qu'une limite inférieure prédéterminée du courant, spécifique à la batterie, ait été atteinte.

3. Un procédé selon la revendication 1 ou 2, **caractérisé en ce que**, durant la deuxième étape (étape 2), la tension de chargement est graduellement augmentée de $U_1$ à une tension inférieure ou égale à $U_2$, le courant étant limité de façon continue pour être empêché d'être augmenté lorsque la tension augmente.

4. Un procédé selon l'une ou plusieurs des revendications précédentes, **caractérisé en ce que** le temps $t_{arb}$, entre le début du processus de chargement jusqu'à ce que le courant à la deuxième étape ait diminué jusqu'à une valeur arbitraire $I_{arb}$, est utilisé comme paramètre de la charge ayant été chargée avant le début de la période $t_3$.

**5.** Un procédé selon l'une ou plusieurs des revendications précédentes, **caractérisé en ce que** la charge ayant été chargée durant le processus de post-chargement est commandée par la commande d'au moins l'une des périodes $t_3$ et $t_4$, leurs limites de courant étant prédéterminées.

**6.** Un procédé selon l'une ou plusieurs des revendications précédentes, **caractérisé en ce que** la charge ayant été chargée durant le processus de post-chargement est commandée par la commande d'au moins l'une des limites de courant ($I_2$ et $I_3$), la durée des périodes $t_3$ et $t_4$ de celles-ci étant prédéterminée.

**7.** Un procédé selon l'une ou plusieurs des revendications précédentes, **caractérisé en ce que** la charge ayant été chargée durant le processus de post-chargement est commandée par la commande de la durée d'au moins l'une périodes $t_3$ et $t_4$ et au moins l'une des limites de courant ($I_2$ et $I_3$).

**8.** Un procédé selon l'une ou plusieurs des revendications précédentes, **caractérisé en ce que** la quatrième étape est suivie par une ou plusieurs autres étapes, ayant sensiblement le même caractère que la troisième et la quatrième étape, la limite de courant de chaque étape étant réduite en relation envers la limite de courant de l'étape précédente.

**9.** Un procédé selon la revendication 8, **caractérisé en ce que** le processus de post-chargement comprend une pluralité d'étapes mineures, la tension étant augmentée chaque fois que le courant est réduit.

**10.** Un procédé selon l'une ou plusieurs des revendications précédentes, **caractérisé en ce que**, subséquemment à la dernière étape dans le processus de post-chargement, un changement à une tension d'entretien, dépendante de la température, est effectué, ladite tension d'entretien étant spécifique à la batterie.

**11.** Un procédé selon l'une ou plusieurs des revendications 2 à 10, dans lequel les paramètres sont adaptés pour chargement de batteries à l'acide et au plomb (VRLA - Valve Regulated Lead Acid) étanches, **caractérisé en ce qu'**un courant $I_1$ sensiblement constant est utilisé pour le chargement durant la première étape (étape 1), de manière que la première étape, conjointement avec la deuxième étape, forment une caractéristique IU, $C_{batt}$ étant la capacité de la batterie dans Ah et

$$I_{arb} = 0,66 \cdot I_1 \quad (|dI/dt| >> 0)$$

$$0,1 \text{ A/Ah} \leq I_1/Cbatt \leq 1 \text{ A/Ah}$$

$$2,30V \text{ par cellule} \leq U_1 \leq 2,50V \text{ par cellule}$$

$$2,50V \text{ par cellule} \leq U_2$$

$$2,50V \text{ par cellule} \leq U_3$$

$$0,005 \text{ A/Ah} \leq I_{tim}/C_{batt} \leq 0,1 \text{ A/Ah}$$

$$0,005 \text{ A/Ah} \leq I_2/C_{batt} \leq 0,1 \text{ A/Ah}$$

$$0,25 \cdot I_2 \leq I_3 \leq 0,75 \cdot I_2$$

$$0,1 \leq t_{arb} (t_3 + t_4) \leq t_{arb}$$

$$t_3 \leq t_4 \leq 6\ t_3.$$

12. Un procédé selon l'une ou plusieurs des revendications 2 à 10, dans lequel les paramètres sont adaptés pour charger des batteries à l'acide et au plomb (VRLA) étanches, **caractérisé en ce qu'**un courant allant en diminuant est utilisé pour charger lors de la première étape, la valeur initiale du courant est $I_1$ et de manière que la première étape, conjointement avec la deuxième étape, forment une caractéristique W,

$$I_{arb} = 0,33 \cdot I_1 \quad (|dI/dt| >> 0)$$

$$0,2\ A/Ah \leq I_1/C_{batt} \leq 2\ A/Ah$$

$$2,30V\ \text{par cellule} \leq U_1 \leq 2,50V\ \text{par cellule}$$

$$2,50V\ \text{par cellule} \leq U_2$$

$$2,50V\ \text{par cellule} \leq U_3$$

$$0,005\ A/Ah \leq I_{tim}/C_{batt} \leq 0,1\ A/Ah$$

$$0,005\ A/Ah \leq I_2/C_{batt} \leq 0,1\ A/Ah$$

$$0,25\ I_2 \leq I_3 \leq 0,75 \cdot I_2$$

$$0,1 \leq t_{arb}\ (t_3 + t_4) \leq t_{arb}$$

$$t_3 \leq t_4 \leq 6\ t_3.$$

Fig. 1

*Fig. 2*

**Fig. 3**